Europäisches Patentamt

European Patent Office

Office européen des brevets

(19)

(11) Veröffentlichungsnummer: **0 106 149**
**A2**

(12) # EUROPÄISCHE PATENTANMELDUNG

(21) Anmeldenummer: **83108966.9**

(22) Anmeldetag: **10.09.83**

(51) Int. Cl.³: **B 60 J 1/17**

(30) Priorität: **16.10.82 DE 3238451**

(43) Veröffentlichungstag der Anmeldung:
**25.04.84 Patentblatt 84/17**

(84) Benannte Vertragsstaaten:
**DE FR GB IT SE**

(71) Anmelder: **AUDI NSU AUTO UNION
AKTIENGESELLSCHAFT
Fellx-Wankelstrasse
D-7107 Neckarsulm(DE)**

(72) Erfinder: **Leitermann, Wulf, Dipl.-Ing.
Kirschenweg 9
D-7107 Bad Wimpfen(DE)**

(72) Erfinder: **Lechler, Rolf
Stuttgarter Strasse 84/1
D-7107 Neckarsulm(DE)**

(74) Vertreter: **Speidel, Eberhardt
Waldpromenade 26
D-8035 Gauting(DE)**

(54) **Seitenfenster für ein Kraftfahrzeug.**

(57) Zur aerodynamisch günstigen Gestaltung des Seitenfensters eines Kraftfahrzeuges ist in eine in der unteren Hälfte eines feststehenden Fensterteiles vorgesehene, eine umlaufende Dichtung tragende Öffnung ein Schiebefenster bündig zur Außenfläche des feststehenden Fensterteiles eingesetzt und über Gleitstücke aus der Öffnung heraus verschiebbar in Führungsschienen aus durchsichtigem Werkstoff aufgenommen, welche auf der Innenseite am feststehenden Fensterteil angeordnet sind. Die Führungsschienen haben Führungsnuten, in die die Gleitstücke mit Zapfen hineinragen und über die das Schiebefenster bei einer Verschiebung aus der Schließstellung heraus einen zunächst nach innen und dann entlang des Fensterteiles gerichteten Verlauf nimmt. Über Arretiervorrichtungen wird das Schiebefenster in der Offenstellung gehalten. Die Offenstellung kann aber auch durch einen in seitlichen Führungsschienen eingreifenden, an der Innenseite des Schiebefensters angeordneten Verschließmechanismus erreicht werden.

EP 0 106 149 A2

## Seitenfenster für ein Kraftfahrzeug

Die Erfindung betrifft ein Seitenfenster für ein Kraftfahrzeug nach dem Oberbegriff des Patentanspruches 1.

Ein Seitenfenster, welches aus einem feststehenden Fensterteil mit einem zu öffnenden Fensterteil besteht, ist beispielsweise aus der DE-OS 29 52 177 bekannt. Bei diesem Seitenfenster ist das untere Fensterteil als Kurbelfenster ausgebildet, während das obere feststehende Fensterteil bündig mit der Außenhaut des Kraftfahrzeuges angeordnet ist. Obwohl es sich bei dem Kurbelfenster nur um ein in seiner Höhe reduziertes Fensterteil handelt, muß dennoch in der Tür auf aufwendige Weise ein Fensterschacht, zumindest eine den Schacht abdeckende Dichtung, sowie eine Kurbel und eine die Bewegung übertragende zugehörige Mechanik vorgesehen sein. Außerdem ist bei einem derartigen Seitenfenster das zu öffnende Fensterteil gegenüber der Außenhaut vertieft liegend ausgebildet, da die im allgemeinen vorgesehene Führung, die das zu öffnende Fensterteil aufnimmt, eine größere Einbautiefe erfordert. Diese aerodynamisch ungünstige Gestaltung des Seitenfensters führt jedoch zu einem weiteren Nachteil, wonach insbesondere bei höheren Geschwindigkeiten ein erhöhter Luftwiderstand und unerwünschte Windgeräusche auftreten.

Der Erfindung liegt die Aufgabe zugrunde, ein Seitenfenster nach dem Oberbegriff des Patentanspruches 1 zu schaffen, das einfach aufgebaut und aerodynamisch günstig gestaltet ist.

Die Aufgabe wird durch die Merkmale des Kennzeichens des Patentanspruches 1 gelöst.

Durch die vorgeschlagene Ausbildung des Seitenfensters, bei dem das zu öffnende Fensterteil in eine Öffnung des fest-

stehenden Fensterteiles bündig zur Außenfläche des feststehenden Fensterteiles eingesetzt ist und aus dieser heraus nach oben verschiebbar in Führungsschienen aufgenommen ist, kann nicht nur eine ausreichend große Freigabe einer Fensterfläche erreicht und die über ein Seitenfenster eines Kraftfahrzeuges erforderliche Kommunikation geführt werden, sondern es ist darüber hinaus auch möglich, die Verglasung insbesondere im Bereich des zu öffnenden Fensterteiles bündig zur Außenhaut zu gestalten, sodaß der Luftwiderstand herabgesetzt und die Windgeräusche verringert werden können. Ferner ergibt sich durch diese Verbesserung ein erheblich vereinfachter kostengünstiger Aufbau der Tür, da auf die Anordnung eines Schachtes und dessen Abdichtung, sowie auf die Fensterkurbel und die zugehörige Mechanik verzichtet werden kann.

Das Seitenfenster ist zweckmäßiger Weise so ausgebildet, daß das Schiebefenster eine im wesentlichen viereckige Form aufweist, und daß die Gleitstücke an den Ecken nahe dem oberen und dem unteren Rand des Schiebefensters angeordnet sind und mit Zapfen in Führungsnuten der beidseitig der Öffnung angeordneten Führungsschienen hineinragen.

Um sowohl eine leichte Verschiebbarkeit als auch in der Schließstellung eine bündige Außenfläche der beiden Fensterteile untereinander zu erzielen, kann jede Führungsschiene eine im wesentlichen entlang dem feststehenden Fensterteil verlaufende Führungsnut für den oberen und unteren Zapfen aufweisen mit einer etwa senkrecht von dieser ausgehenden und auf das Fensterteil gerichteten Seitennut, in die der obere Zapfen in der Schließstellung des Schiebefensters aufgenommen ist. Zum Öffnen muß bei dieser Ausführung lediglich das Schiebefenster zunächst mit dem oberen Zapfen aus der Seitennut herausbewegt und kann darauf nach oben verschoben werden.

Es ist aber auch möglich, daß jede Führungsschiene eine den oberen Zapfen aufnehmende erste Führungsnut und eine den unteren Zapfen aufnehmende zweite Führungsnut aufweist, wobei bei einer Verschiebung des Schiebefensters aus der Schließstellung heraus die erste Führungsnut zunächst einen schräg nach innen und oben und dann entlang des Fensterteiles und die zweite Führungsnut einen zunächst geringfügig nach außen und dann entlang des Fensterteiles gerichteten Verlauf nimmt. In diesem Fall wird das Schiebefenster bei einer Verschiebebewegung aus der Schließstellung selbsttätig aus der Öffnung herausgeführt.

Zum Festhalten des Schiebefensters kann in der Führungsnut eine den oberen Zapfen in der Offenstellung des Schiebefensters festhaltende Arretiervorrichtung vorgesehen sein.

Die Arretiervorrichtung kann von einer in die Führungsnut hineinragenden, von einer Feder belasteten Kugel gebildet sein. Die Arretiervorrichtung kann aber auch von einer den Zapfen teilweise umgreifenden federnden Klammer gebildet werden.

Eine weitere Möglichkeit, das Schiebefenster in der geöffneten Stellung festzuhalten, kann dadurch erreicht werden, daß die zweite Führungsnut an ihrem oberen Ende eine den unteren Zapfen in der Offenstellung aufnehmenden, geringfügig nach innen und unten gerichteten Verlauf aufweist.

Für die Handhabung des Schiebefensters und Festhalten sowohl in seiner Schließstellung oder Offenstellung als auch in Zwischenstellungen ist vorgesehen, daß an dem Schiebefenster ein Verschließmechanismus angeordnet ist, der ein Betätigungselement und lösbare, in entsprechende Vertiefungen in die Führungsschienen einrastende Riegel aufweist.

Der Verschließmechanismus kann am oberen Rand des Schiebefensters angeordnet sein. Dieser Verschließmechanismus ist zweckmäßiger Weise in dem Fall angeordnet, wenn das Fenster vor dem Öffnen zunächst von Hand aus der Öffnung herausbewegt werden muß.

Wenn nach einer weiteren Möglichkeit der Verschließmechanismus am unteren Rand des Schiebefensters angeordnet ist, bleibt dieser bei einem üblicher Weise geschlossenen Schiebefenster weitgehend außerhalb des Blickfeldes.

Zur Abdichtung des Schiebefensters ist ohne die Bewegbarkeit und aerodynamisch günstige Gestaltung zu beeinträchtigen vorgesehen, daß die Öffnung des feststehenden Fensterteiles eine das Schiebefenster in dessen Schließstellung an seinem oberen und seitlichen Rand überdeckende und eine am unteren Rand des Schiebefensters von innen anliegende Dichtung trägt.

Eine verhältnismäßig unauffällige Gestaltung der Aufnahme des Schiebefensters ist dadurch erzielbar, daß die Führungsschienen aus durchsichtigem Werkstoff bestehen, und daß das feststehende Fensterteil mit den Führungsschienen einstückig ausgebildet ist. Die einstückige Ausbildung bietet sich an, wenn das feststehende Fensterteil - wie dies in jüngster Zeit häufig vorgesehen - aus Kunststoff besteht.

Ein Ausführungsbeispiel der Erfindung wird im folgenden unter Bezugnahme auf die Zeichnungen näher beschrieben. Es zeigt:

Fig. 1 eine Seitenansicht auf das obere Teilstück einer Seitentür eines Kraftfahrzeuges mit einem erfindungsgemäßen Seitenfenster,

Fig. 2 einen Schnitt durch ein Teilstück des Seitenfensters gemäß Linie II-II in Fig. 1 in vergrößertem Maßstab,

Fig. 3 einen senkrechten Schnitt durch das Seitenfenster
gemäß Linie III-III in Fig. 1 mit einer Führungsschiene in einer ersten Ausführungsform in vergrößertem Maßstab,

Fig. 4 einen Schnitt wie in Fig. 3 mit einer Führungsschiene in einer zweiten Ausführungsform,

Fig. 5 das Teilstück eines Schnittes wie in Fig. 3 mit
einer Arretiervorrichtung in einer ersten Ausführungsform,

Fig. 6 einen Ausschnitt eines Schnittes wie in Fig. 3
mit einer Arretiervorrichtung in einer zweiten
Ausführungsform, und

Fig. 7 einen Schnitt durch einen Verschließmechanismus
gemäß Linie VII-VII in Fig. 1 in vergrößertem
Maßstab.

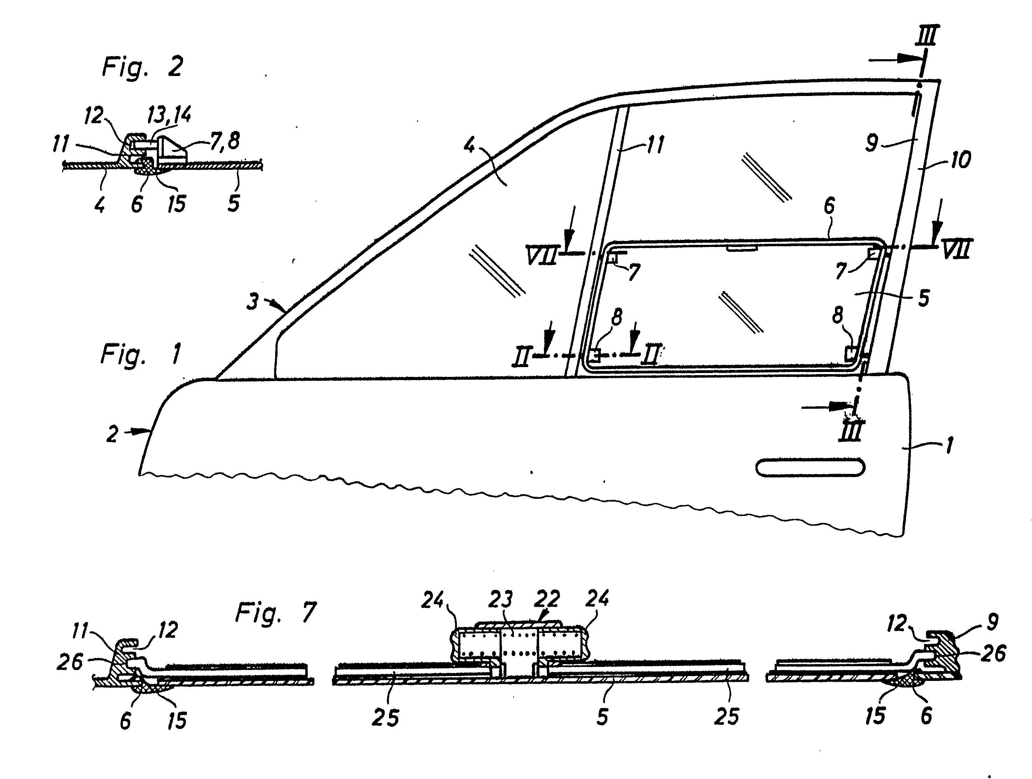

Die in Fig. 1 als Teilstück beispielsweise gezeigte Seitentür 1 eines Kraftfahrzeuges weist ein Türblatt 2 und ein
Seitenfenster 3 auf, welches aus einem feststehenden Fensterteil 4 und einem als Schiebefenster 5 ausgebildeten, zuöffnenden Fensterteil besteht. Das im wesentlichen viereckige Schiebefenster 5 ist zur Verringerung des Luftwiderstandes bzw. der Windgeräusche sowie zur aerodynamisch
günstigen Gestaltung der Außenhaut des Kraftfahrzeuges
in eine mindestens die Größe des Schiebefensters aufweisende Öffnung 6 bündig zur Außenfläche des feststehenden Fensterteiles 4 eingesetzt und aus dieser Schließstellung heraus nach oben verschiebbar angeordnet. Zu seiner Verschiebbarkeit ist das Schiebefenster 5 über obere Gleitstücke 7, die an den Ecken nahe dem oberen Rand, und untere Gleitstücke 8, die an den Ecken nahe dem unteren Rand des Schiebefenster 5 befestigt sind, in zwei Führungsschienen aufgenommen, die auf der Innenseite des Fensterteiles 4 weitgehend senkrecht verlaufend seitlich der Öffnung 6 angeordnet sind. Die auf der Zeichnung rechte Führungsschiene 9 ist mit einem Fensterrahmen 10 verbunden, welcher das Fensterteil 4 auf dessen Innenseite umgibt und mit diesem verklebt ist. Die linke Führungsschiene 11 erstreckt sich dagegen zwischen dem Türblatt 2 und dem auf der Innenseite des Fensterteiles 4 am oberen Rand verlaufenden Fensterrahmen 10.

Wie aus dem in Fig. 2 vergrößert gezeigten Ausschnitt hervorgeht, ist die Führungsschiene 11 beispielsweise einstückig mit dem Fensterteil 4 ausgebildet und besteht somit aus dem gleichen Werkstoff, wie z.B. durchsichtigem Kunststoff, wie Acryl oder Polycarbonat. Die Führungsschiene 11 kann abweichend von der Darstellung aber auch als Einzelteil mit dem Fensterteil 4 verklebt sein. In der Führungsschiene 11 ist eine Führungsnut 12 angeordnet, in der beispielsweise sowohl das untere Gleitstück 8 mit einem Zapfen 14 als auch das obere Gleitstück 7 mit einem Zapfen 13 geführt ist. Die in Fig. 1 rechte Führungsschiene 9 ist im Prinzip genau so wie die Führungsschiene 11 angeordnet und aufgebaut, jedoch mit dem Unterschied, daß sie beispielsweise mit dem Fensterrahmen 10 verschraubt ist. Die rechte Führungsschiene 9 kann aber auch verklebt oder einstückig mit dem Fensterrahmen 10 oder mit dem Fensterteil 4 ausgebildet sein. Aus der Darstellung in Fig. 2 ist außerdem ersichtlich, daß das Schiebefenster 5 in der Schließstellung bündig zur Außenfläche des Fensterteiles 4 verläuft. Gegen das Eindringen von Wasser trägt die Öffnung 6 des Fensterteiles 4 eine Dichtung 15, die an ihrem oberen und seitlichen Rand mit einer Lippe dichtend am Schiebefenster 5 anliegt.

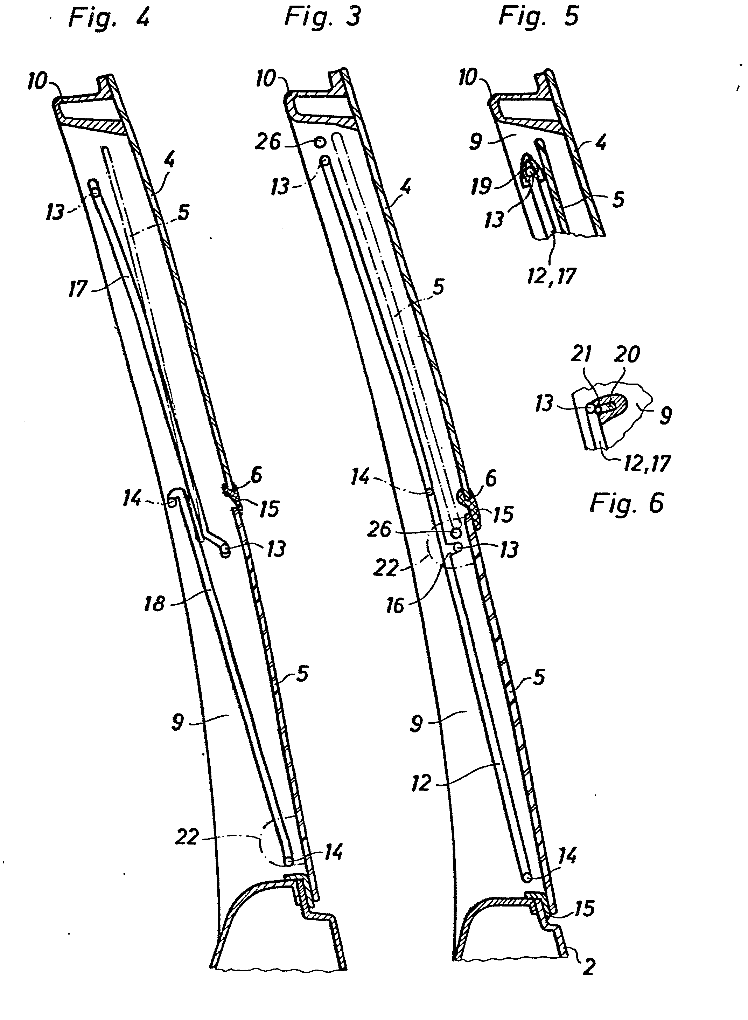

Der Schnitt in Fig. 3 zeigt in vergrößertem Maßstab, daß die Führungsnut 12, die sowohl in der Führungsschiene 9 als auch 11 angeordnet ist, im wesentlichen entlang und in etwa der gleichen Krümmung des Fensterteiles 4 in einem sich von unten nach oben vergrößernden Abstand zum Fensterteil 4 nahe dem Türblatt 2 beginnend bis nahe dem oberen Fensterrahmen 10 verläuft. In der gezeigten Schließstellung, die wiederum den bündigen Verlauf der Außenfläche des Fensterteiles 4 mit dem Schiebefenster 5 sowie mit dem Türblatt 2 verdeutlicht, befindet sich der untere Zapfen 14 am unteren Ende in der Führungsnut 12, während der obere Zapfen 13 in einer von der Führungsnut 12 abzweigenden und auf das Fensterteil 4 bzw. des Schiebefensters 5 gerichteten Seitennut 16 aufgenommen ist. Aus der Darstellung ist auch die Anordnung der Dichtung 15 ersichtlich, die am unteren Rand der Öffnung 6 von innen am Schiebefenster 5 anliegt.

Zum Öffnen wird das Schiebefenster 5 mit dem oberen Zapfen 13 zunächst nach innen aus der Seitennut 16 und damit an seinem oberen Rand aus der Öffnung 6 herausbewegt, wobei um den unteren Zapfen 14 eine geringfügige Schwenkbewegung stattfindet, die zur Folge hat, daß das Schiebefenster 5 an seinem unteren Rand von der innen anliegenden Dichtung 15 abhebt. Darauf kann das Schiebefenster 5 über die Führungsnut 12 nach oben und vollständig aus der Öffnung 6 herausgeschoben werden und befindet sich gemeinsam mit dem Zapfen 13 und 14 in der strichpunktiert angedeuteten Stellung.

In dem in Fig. 4 gezeigten Schnitt sind anstelle von einer Führungsnut eine den oberen Zapfen 13 aufnehmende erste Führungsnut 17 und eine den unteren Zapfen 14 aufnehmende zweite Führungsnut 18 in den Führungsschienen 9 bzw. 11 vorgesehen. Ausgehend von der dargestellten Schließstellung des Schiebefensters 5 nimmt die erste Führungsnut 17 zunächst einen schräg nach oben und innen und dann einen im wesentlichen entlang des Fensterteiles 4 gerichteten Verlauf. Die zweite Führungsnut 18 verläuft dagegen geringfügig nach außen und dann entlang des Fensterteiles 4, wobei sich der Abstand zum Fensterteil 4 sowohl bei der Führungsnut 17 als auch 18 von unten nach oben vergrößert. Durch diesen Verlauf der Führungsnuten 17 und 18 wird das Schiebefenster 5 beim Öffnen selbsttätig von der umgebenden Dichtung 15 nach innen bzw. nach außen abgehoben und an seinem oberen Rand aus der Öffnung 6 herausbewegt und nimmt schließlich mit den Zapfen 13 und 14 die strichpunktiert angegebene Offenstellung ein. Zur Arretierung des Schiebefensters 5 in der Offenstellung weist die Führungsnut 18 beispielsweise an ihrem oberen Ende zur Aufnahme des unteren Zapfens 14 einen zunächst nach innen und dann geringfügig nach unten gerichteten Verlauf auf.

In Fig. 5 ist gezeigt, daß die Arretiervorrichtung für das Festhalten des Schiebefensters 5 in der Offenstellung aber auch von einer Klammer 19 gebildet werden kann, die am oberen Ende in die Führungsnut 12 oder 17 in eine entsprechende Aussparung eingesetzt ist und den Zapfen 13 umgibt.

Aus Fig. 6 geht hervor, daß die Arretiervorrichtung für das Schiebefenster ebenso von einer in einer entsprechenden Bohrung am oberen Ende der Führungsnut 12 oder 17 angeordneten, von einer Druckfeder 20 belasteten Kugel 21 gebildet werden kann, die in der Offenstellung mit dem Zapfen 13 zusammenwirkt und das Schiebefenster 5 festhält.

Fig. 7 zeigt einen Verschließmechanismus zur Verriegelung des Schiebefensters 5, mit einem Betätigungselement 22, welches auf der Innenseite des Schiebefensters 5 in der Mitte nahe seinem Rand befestigt ist. Das Betätigungselement 22 weist beispielsweise zwei gegeneinander entgegen der Kraft einer Feder 23 parallel zum Schiebefenster 5 zusammendrückbare Druckschieber 24 auf, die in je einen Riegel 25 eingreifen, die sich seitlich über entsprechende Halterungen bis in Vertiefungen 26 in den Führungsschienen 9 und 11 hinein erstrecken, in denen sie lösbar einrasten. Der Verriegelungsmechanismus kann - wie aus Fig. 1 und Fig. 3 andeutungsweise hervorgeht - mit seinem Betätigungselement 22 am oberen Rand des Schiebefensters 5 angeordnet sein, wobei die in Fig. 3 sichtbare untere Vertiefung 26 für die Schließstellung und die obere Vertiefung 26 für die Offenstellung vorgesehen ist. In diesem Fall kann auf eine zusätzliche Arretierung für die Offenstellung verzichtet werden. Für Zwischenstellungen des Schiebefensters 5 können zwischen den oberen und unteren Vertiefungen 26 weitere - nicht dargestellte - gegebenenfalls in die Führungsnuten bzw. -schienen eingearbeitete Vertiefungen angeordnet sein. Es ist aber auch möglich, daß der Verriegelungsmechanismus mit seinem Betätigungselement 22 am unteren Rand des Schiebefensters 5 angeordnet ist - wie dies in Fig. 4 strichpunktiert angedeutet ist. Aus Fig. 7 ist ferner die Dichtung 15 ersichtlich, die an dem seitlichen Rand der Öffnung 6 des Fensterteiles 4 angeordnet ist und mit einer Lippe dichtend am Schiebefenster 5 anliegt.

Selbstverständlich sind weitere Abwandlungen der dargestellten Ausführungsbeispiele möglich, ohne den Rahmen der Erfindung zu verlassen. So kann beispielsweise das Betätigungselement für die Verriegelung des Schiebefensters auf eine andere, nach dem Stand der Technik bekannte Weise ausgebildet sein. Ebenso ist es möglich, daß auch die Gleitstücke aus durchsichtigem Werkstoff bestehen und mit dem Schiebefenster einstückig ausgebildet sind. Ferner können die Führungsnuten hinterschnitten, d.h.beispielsweise T-förmig oder schwalbenschwanzförmig ausgebildet sein und die Zapfen mit entsprechend geformten Ansätzen in die Führungsnuten eingreifen.

246/82    P 32 38 451.3    angemeldet am 16.10.1982

AUDI NSU AUTO UNION AKTIENGESELLSCHAFT, Neckarsulm/Württ.

---

Seitenfenster für ein Kraftfahrzeug

---

P a t e n t a n s p r ü c h e

1. Seitenfenster für ein Kraftfahrzeug, das aus einem feststehenden Fensterteil mit einem zu öffnenden Fensterteil besteht, d a d u r c h   g e k e n n z e i c h n e t , daß der zu öffnende Fensterteil (5) in eine in der unteren Hälfte des feststehenden Fensterteiles (4) vorgesehenen Öffnung (6) bündig zur Außenfläche des feststehenden Fensterteiles (4) eingesetzt ist und als Schiebefenster (5) über Gleitstücke (7, 8) aus der Öffnung (6) heraus nach oben verschiebbar in Führungsschienen (9, 11) aufgenommen ist, welche an der Innenseite des feststehenden Fensterteiles (4) angeordnet sind.

2. Seitenfenster nach Anspruch 1, dadurch gekennzeichnet, daß das Schiebefenster (5) eine im wesentlichen viereckige Form aufweist, und daß die Gleitstücke (7, 8) an den Ecken nahe dem oberen und dem unteren Rand des Schiebefensters (5) angeordnet sind und mit Zapfen (13,14) in Führungsnuten (12, 17, 18) der beidseitig der Öffnung (6) angeordneten Führungsschienen (9, 11) hineinragen.

3. Seitenfenster nach den Ansprüchen 1 und 2, dadurch gekennzeichnet, daß jede Führungsschiene (9, 11) eine im wesentlichen entlang dem feststehenden Fensterteil (4) verlaufende Führungsnut (12) für den oberen und unteren Zapfen (13, 14) aufweist mit einer etwa senkrecht von dieser ausgehenden und auf das Fensterteil (4) gerichteten Seitennut (16), in die der obere Zapfen (13) in der Schließstellung des Schiebefensters (5) aufgenommen ist.

4. Seitenfenster nach den Ansprüchen 1 und 2, dadurch gekennzeichnet, daß jede Führungsschiene (9, 11) eine den oberen Zapfen (13) aufnehmende erste Führungssnut (17) und eine den unteren Zapfen (14) aufnehmende zweite Führungsnut (18) aufweist, wobei bei einer Verschiebung des Schiebefensters (5) aus der Schließstellung heraus die erste Führungsnut (17) zunächst einen schräg nach innen und oben und dann entlang des Fensterteiles (4) und die zweite Führungsnut (18) einen zunächst geringfügig nach außen und dann entlang des Fensterteiles (4) gerichteten Verlauf nimmt.

5. Seitenfenster nach einem der Ansprüche 1 bis 4, dadurch gekennzeichnet, daß in der Führungsnut (12, 17) eine den oberen Zapfen (13) in der Offenstellung desSchiebefensters (5) festhaltende Arretiervorrichtung vorgesehen ist.

6. Seitenfenster nach Anspruch 5, dadurch gekennzeichnet, daß die Arretiervorrichtung von einer in die Führungsnut (12, 17) hineinragenden, von einer Feder (20) belasteten Kugel (21) gebildet ist.

7. Seitenfenster nach Anspruch 5, dadurch gekennzeichnet, daß die Arretiervorrichtung von einer den Zapfen (13) teilweise umgreifenden federnden Klammer (19) gebildet ist.

8. Seitenfenster nach Anspruch 4, dadurch gekennzeichnet, daß die zweite Führungsnut (18) an ihrem oberen Ende einen den unteren Zapfen (14) in der Offenstellung aufnehmenden, geringfügig nach innen und unten gerichteten Verlauf aufweist.

9. Seitenfenster nach einem der Ansprüche 1 - 8, dadurch gekennzeichnet, daß an dem Schiebefenster (5) ein Verschließmechanismus angeordnet ist, der ein Betätigungselement (22) und lösbare, in entsprechende Vertiefungen (26) in die Führungsschienen (9, 11) einrastende Riegel (25) aufweist.

10. Seitenfenster nach den Ansprüchen 3 und 9, dadurch gekennzeichnet, daß der Verschließmechanismus am oberen Rand des Schiebefensters (5) angeordnet ist.

11. Seitenfenster nach den Ansprüchen 4 und 9, dadurch gekennzeichnet, daß der Verschließmechanismus am unteren Rand des Schiebefensters (5) angeordnet ist.

12. Seitenfenster nach einem der Ansprüche 1 bis 4, dadurch gekennzeichnet, daß die Öffnung (6) des feststehenden Fensterteiles (4) eine das Schiebefenster (5) in dessen Schließstellung an seinem oberen und seitlichen Rand überdeckende und eine am unteren Rand des Schiebefensters (5) von innen anliegende Dichtung (15) trägt.

13. Seitenfenster nach einem der vorhergehenden Ansprüche,
dadurch gekennzeichnet, daß die Führungsschienen (9, 11)
aus durchsichtigem Werkstoff bestehen, und daß das feststehende Fensterteil (4) mit den Führungsschienen (9, 11)
einstückig ausgebildet ist.

Fig. 2

Fig. 1

Fig. 7

1/2

0106149

Fig. 4    Fig. 3    Fig. 5

Fig. 6